# EUROPÄISCHE PATENTSCHRIFT

(11) **EP 4 469 777 B1**
(45) Veröffentlichungstag und Bekanntmachung des Hinweises auf die Patenterteilung: **10.09.2025**
(21) Anmeldenummer: 23701273.7
(22) Anmeldetag: 17.01.2023
(51) Int. Cl.: G01M 17/007

(54) **PRÜFSTAND UND VERFAHREN ZUR ABSICHERUNG VON FAHRASSISTENZSYSTEMEN AUTOMATISIERTER KRAFTFAHRZEUGE**
TEST BENCH AND METHOD FOR SAFEGUARDING DRIVING ASSISTANCE SYSTEMS OF AUTOMATED MOTOR VEHICLES
BANC D'ESSAI ET MÉTHODE DE SAUVEGARDE DES SYSTÈMES D'AIDE À LA CONDUITE DES VÉHICULES AUTOMOBILES AUTOMATISÉS

(30) Priorität: 28.01.2022 DE 102022102068
(43) Veröffentlichungstag der Anmeldung: 04.12.2024
(73) Patentinhaber: Bayerische Motoren Werke Aktiengesellschaft, 80809 München (DE)
(72) Erfinder: HELLER, Martin, 86836 Graben (DE); KOST, Till, 80809 München (DE)
(86) Internationale Anmeldenummer: PCT/EP2023/050979
(87) Internationale Veröffentlichungsnummer: WO 2023/143964

(56) Entgegenhaltungen:
- WO-A1-2021/068019
- DE-A1- 102008 051 233
- DE-A1- 102011 017 146
- DE-A1- 102012 109 936
- DE-B3- 102013 010 140
- US-B2- 9 046 440

## Beschreibung

Die vorliegende Erfindung betrifft einen Prüfstand zur Absicherung von Fahrassistenzsystemen automatisierter Kraftfahrzeuge und ein Verfahren zum Betreiben eines solchen Prüfstands.

Für eine Absicherung von Fahrassistenzsystemen werden herkömmlich Target-Modelle verwendet. Diese können durch Trägerplattformen schwebend, rollend oder gleitend zielgerichtet bewegt werden. Das Gewicht dieser Targets ist auf die Anwendung hin optimiert und die Targets weisen meist größtenteils Schaumstoff auf. Aufgrund ihres geringen Gewichts im Vergleich zu Realfahrzeugen ist damit auch das Bewegen der Targets einfacher möglich. Änderungen in Zulassungsbestimmungen und geänderte Anforderungen an eine Absicherung von Fahrassistenzsystemen, insbesondere hinsichtlich Geschwindigkeiten der Targets und die Diversität der Targets, machen es notwendig, auch Realfahrzeuge für eine Absicherung zu verwenden. Aus Sicherheitsgründen ist es teilweise nötig, die Realfahrzeuge fahrerlos schienengeführt zu bewegen. Genauer gesagt ist es teilweise erforderlich, um beispielsweise einen Erfassungswinkel einer Kamera und/oder eines Radarsystems zu testen, vorgegebene Szenarien zu simulieren, bei denen sich eine Trajektorie des zu testenden Kraftfahrzeugs und eine Trajektorie des Targets unter verschiedenen Winkeln kreuzen. Das heißt, mindestens zweie Fahrzeuge können versetzt zueinander, aber aufeinander zu fahren. Hierbei ist eine Herausforderung, ein Schienensystem so zu gestalten, dass eine Kollision der zur Fortbewegung der Testfahrzeuge verwendeten Transportschlitten bei einem Kreuzungspunkt zweier Schienen des Schienensystems mit ausreichender Sicherheit verhindert werden kann. So können Schäden am Prüfstand und an den Testfahrzeugen vermieden werden.

Ein für die Erfindung relevantes Dokument des Standes der Technik ist das Patentdokument DE 10 2012 109936 A1.

Vor dem Hintergrund dieses Standes der Technik besteht die Aufgabe der vorliegenden Erfindung darin, eine Vorrichtung und ein Verfahren anzugeben, welche jeweils geeignet sind, zumindest die oben genannten Nachteile des Standes der Technik zu überwinden.

Gelöst wird die Aufgabe durch die Merkmale der unabhängigen Ansprüche. Die Unteransprüche haben bevorzugte Weiterbildungen der Erfindung zum Inhalt.

Danach wird die Aufgabe durch einen Prüfstand zur Absicherung von Fahrassistenzsystemen automatisierter Kraftfahrzeuge gelöst.

Der Prüfstand umfasst ein Schienensystem mit zumindest zwei sich in einem Kreuzungspunkt kreuzenden Führungsschienen, je Führungsschiene jeweils einen Transportschlitten zum Transport eines Testfahrzeugs, und ein Sicherheitssystem aufweisend eine an dem Kreuzungspunkt angeordnete Vorrangschaltung, die ausgestaltet ist, um ein zeitgleiches Durchfahren des Kreuzungspunkts durch die beiden Transportschlitten zu verhindern.

Mit anderen Worten, die Offenbarung basiert auf dem Prinzip einer Schienenführung für Transportschlitten, die während eines Versuchs am Prüfstand bevorzugt mittels des Transportschlittens übertragene Querkräfte sowie vertikale Zugkräfte aufnimmt, aber bevorzugt auch eine ausreichend exakte Beschleunigung, Geschwindigkeit und Verzögerung sowie die Positionserkennung des Transportschlittens liefert. Hierbei ist gemäß der Offenbarung ein Kreuzungselement bzw. Kreuzungspunkt vorgesehen, an dem sich die beiden Führungsschienen, z.B. unter einem, optional veränderbaren, Winkel, von 90° oder 45° (oder einem zwischen 45° und 90° liegenden Winkel) kreuzen bzw. aufeinandertreffen. Hierbei können Anfahrten aus verschiedenen Winkeln zu einem möglichen Kollisionspunkt, d.h. dem Kreuzungspunkt, simuliert werden. Je nach Beschleunigungsrichtung der jeweilig verwendeten auf den Transportschlitten befestigten Testfahrzeugen können Linksverkehr, Rechtsverkehr sowie Annäherung aus einem vorbestimmten Winkel, z.B. in 45° Abstufung, erreicht werden. Grundsätzlich kann durch den Versatz der Testfahrzeuge ein Erkennungswinkel für eine zu testende Sensorik eines der Testfahrzeuge variiert werden. Hierzu können unterschiedliche Geschwindigkeiten umgesetzt werden, welche dazu führen, dass die Systeme mit einer hohen Kritikalität in den Kollisionsbereich am Kreuzungspunkt bewegt werden. Um eine Kollision am Kreuzungspunkt zu verhindern, ist daher die Vorrangschaltung vorgesehen, welche eine Kollision von zwei sich gleichzeitig auf den Kreuzungspunkt zubewegenden, an dem jeweiligen Transportschlitten befestigten Testfahrzeugen verhindert.

Nachfolgend werden Weiterbildungen des oben beschriebenen Prüfstands im Detail dargelegt.

Das Schienensystem kann einen Motor je Führungsschiene zum Bewegen des jeweiligen Transportschlittens entlang der Führungsschiene und ein erstes entlang den Führungsschienen angeordnetes Positionssensorsystem umfassen, das ausgestaltet ist, um eine jeweilige aktuelle erste Ist-Position der Transportschlitten zu erfassen. Ferner kann das Schienensystem eine Steuereinheit für das Schienensystem umfassen, die ausgestaltet ist, um basierend auf den von dem ersten Positionssensorsystem erfassten ersten Ist-Positionen eine jeweilige Soll-Position und Soll-Geschwindigkeit des jeweiligen Transportschlittens mittels des jeweiligen Motors so zu steuern, dass die Transportschlitten den Kreuzungspunkt durchfahren, ohne sich zeitgleich am Kreuzungspunkt zu befinden.

Bei dem Motoren kann es sich beispielsweise um einen Linearmotor bzw. Linearantrieb handeln. Das heißt, für jede der zumindest zwei Führungsschienen kann eine Antriebseinrichtung bereitgestellt werden, die ausgestaltet ist, um den Transportschlitten als angetriebenes Objekt, insbesondere geradlinig, entlang der jeweiligen Führungsschiene zu bewegen. Bei einem solchen linearmotorgeführten System kann ein Überwinden des Kreuzungspunktes durch eine Unterbrechung der Energieversorgung so gelöst werden, dass der jeweilige Transportschlitten auf den jeweiligen Teilstücken der jeweiligen Führungsschiene separat mit Energie versorgt werden kann. Somit kann sichergestellt werden, dass sowohl auf dem verlassenen Teilstück als auch auf dem Teilstück nach der Kreuzung eine Antriebskraft mittels des Motors bereitgestellt werden kann.

Das erste Positionssensorsystem kann im Wesentlichen entlang der gesamten Länge der jeweiligen Führungsschiene installiert und/oder ausgestaltet sein, eine aktuelle Ist-Position des jeweiligen Transportschlittens entlang im Wesentlichen der gesamten Länge der jeweiligen Führungsschiene zu erfassen.

Die Steuereinheit für das Schienensystem kann eine Eingangsschnittstelle aufweisen, über die die Steuereinheit für das Schienensystem mit dem ersten Positionssensorsystem, optional drahtlos und/oder drahtgebunden, verbunden ist und über die die Steuereinheit für das Schienensystem die von dem ersten Positionssensorsystem erfassten aktuellen Ist-Positionen der Transportschlitten empfängt. Die Steuereinheit kann eine Recheneinheit aufweisen, welche ausgestaltet ist, um unter Verwendung eines Algorithmus, der die aktuellen Ist-Positionen als Eingangsdaten verwendet, ein an die Motoren auszugebendes Steuersignal zu berechnen. Der Algorithmus kann in einem Speicher der Steuereinheit hinterlegt und/oder, insbesondere veränderlich, hinterlegbar sein. Die Recheneinheit kann zu einer Ausgangsschnittstelle verbunden sein, über die das Steuersignal zu den jeweiligen Motoren der Führungsschienen ausgegeben wird. Die Motoren können basierend auf dem Steuersignal die Bewegung der Transportschlitten hinsichtlich deren Position und Geschwindigkeit beeinflussen.

Das Sicherheitssystem kann eine Steuereinheit für die Vorrangschaltung und ein zweites im Bereich des Kreuzungspunkts angeordnetes Positionssensorsystem aufweisen, das ausgestaltet ist, um eine jeweilige zweite Ist-Position der Transportschlitten zu bestimmen. Die Steuereinheit für die Vorrangschaltung kann ausgestaltet sein, um die Vorrangschaltung basierend auf den von dem zweiten Positionssensorsystem erfassten zweiten Ist-Positionen so zu steuern, dass die Vorrangschaltung das zeitgleiche Durchfahren des Kreuzungspunkts durch die Transportschlitten verhindert.

Das zweite Positionssensorsystem kann im Wesentlichen ausschließlich in dem Bereich des Kreuzungspunktes, d.h. knapp vor und knapp nach dem Kreuzungspunkt, die Ist-Positionen der Transportschlitten erfassen. Insbesondere kann es sich dabei um eine diskontinuierliche Bestimmung der aktuellen Ist-Positionen handeln, d.h. es kann bestimmt werden, ob der jeweilige Transportschlitten in den Bereich am Kreuzungspunkt eingefahren ist und ggf. auch ob der jeweilige Transportschlitten den Bereich am Kreuzungspunkt wieder verlassen hat. Dies kann z.B. mittels Lichtschranken erfolgen, die vor und nach dem Kreuzungspunkt angeordnet sind.

Die Steuereinheit für die Vorrangschaltung kann eine Eingangsschnittstelle aufweisen, über die die Steuereinheit für die Vorrangschaltung mit dem zweiten Positionssensorsystem, optional drahtlos und/oder drahtgebunden, verbunden ist und über die die Steuereinheit für die Vorrangschaltung die von dem zweiten Positionssensorsystem erfassten aktuellen Ist-Positionen der Transportschlitten empfängt. Die Steuereinheit kann eine Recheneinheit aufweisen, welche ausgestaltet ist, um unter Verwendung eines Algorithmus, der die aktuellen zweiten Ist-Positionen als Eingangsdaten verwendet, ein an die Vorrangschaltung auszugebendes Steuersignal zu berechnen. Der Algorithmus kann in einem Speicher der Steuereinheit hinterlegt und/oder, insbesondere veränderlich, hinterlegbar sein. Die Recheneinheit kann zu einer Ausgangsschnittstelle verbunden sein, über die das Steuersignal zu der Vorrangschaltung ausgegeben wird. Die Vorrangschaltung kann basierend auf dem Steuersignal den jeweiligen Transportschlitten, insbesondere ungehindert, passieren lassen und/oder abbremsen, insbesondere stoppen.

Die Steuereinheit für die Vorrangschaltung kann ausgestaltet sein, um die Vorrangschaltung basierend auf den zweiten Ist-Positionsdaten so zu steuern, dass ein Überfahren des Kreuzungspunktes für einen vorbestimmten Zeitraum nach einem Erreichen des Bereichs des Kreuzungspunkts durch einen ersten der zwei Transportschlitten für einen zweiten der zwei Transportschlitten verhindert wird.

Denkbar ist, dass eine Länge bzw. eine Dauer des vorbestimmten Zeitraums von einer Geschwindigkeit der beiden Transportschlitten abhängt.

Die Steuereinheit für die Vorrangschaltung und die Steuereinheit für das Schienensystem können als zwei, insbesondere physisch, voneinander getrennte Systeme ausgeführt sein.

Das heißt, es kann eine redundante Absicherung bereitgestellt werden, bei der bei einem Ausfall eines der beiden Systeme, d.h. des von der Steuereinheit für die Vorrangschaltung gesteuerten Systems bzw. des von der Steuereinheit für das Schienensystem gesteuerten Systems, weiterhin eine Kollision der Transportschlitten am Kreuzungspunkt vermieden werden kann.

Die Vorrangschaltung kann im Bereich des Kreuzungspunkts je Führungsschiene jeweils zumindest ein Bremssystem aufweisend zwei sich an der Führungsschiene gegenüberliegend angeordnete Bremsaktuatoren mit Bremsbacken zum Abbremsen oder Stoppen des jeweiligen Transportschlittens aufweisen.

Bevorzugt weist die Vorrangschaltung je Führungsschiene zwei der Bremssysteme auf, wobei ein erstes der zwei Bremssysteme an einer Seite des Kreuzungspunktes und ein zweites der zwei Bremssysteme an der gegenüberliegenden Seite des Kreuzungspunktes angeordnet ist, sodass die jeweilige Führungsschiene in beide Richtungen bzw. bidirektional betreibbar ist.

Die Bremsbacken des Bremssystems können mittels der Bremsaktuatoren aufeinander zu und/oder voneinander weg bewegbar sein, um eine für den jeweiligen Transportschlitten durchfahrbare Breite der jeweiligen Führungsschiene zu verringern und/oder zu verbreitern.

Denkbar ist, dass die Bremsbacken in einer Ausgangsstellung ein Durchfahren der Transportschlitten verhindern und bei einem aktivierten Sicherheitssystem aktiv auseinandergefahren werden, um einen Durchfahrtsweg in der jeweiligen Führungsschiene für den jeweiligen Transportschlitten freizugeben. Bevorzugt erfolgt automatisch eine mechanische Rückstellung, sobald das Sicherheitssystem deaktiviert ist. Damit kann auch bei einem elektrischen oder elektromechanischen Ausfall des restlichen Sicherheitssystems automatisch eine sperrende Stellung der Bremsbacken erreicht und damit eine Kollision am Kreuzungspunkt verhindert werden. Mit anderen Worten, die ggf. als elektromechanische Bremsaktuatoren ausgeführten Bremssysteme können so vorgespannt werden, dass diese in deren Normal- bzw. Normstellung die Bremsung der Transportschlitten einleiten und ein Sicherheitsrechner im Normalbetrieb diese Bremseinrichtung aktive freizugeben hat. Sollte ein Systemausfall erfolgen kann das System aus Sicherheitsgründen in alle Richtung bremsen.

Die Bremsbacken des Bremssystems können eine sich in Richtung des Kreuzungspunkts, insbesondere linear, verbreiternde Form aufweisen. Das heißt, die Bremsbacken können keilförmig bzw. in einer Draufsicht dreiecksförmig ausgebildet sein. Die Bremseinrichtung kann so ausgerichtet sein, dass die Maximalverzögerung durch eine Keilform der Bremselemente erfolgt und verstärkt wird. Die Bremselemente können in Fahrtrichtung der Transportschlitten breiter werden und können somit durch eine Verkeilung bremsen. Dadurch kann der Transportschlitten zunächst mit einer geringen aber im Verlauf der Bremsung zunehmenden Bremskraft beaufschlagt werden, sodass zu keinem Zeitpunkt der Bremsung des Transportschlittens ein Grenzwert einer maximalen (negativen) Beschleunigung des Systems überschritten wird.

Das oben Beschriebene kann mit anderen Worten und auf eine konkretere Implementierung der Offenbarung bezogen wie nachfolgend dargelegt zusammengefasst werden.

Bei einer Verwendung zweier Schlitten auf der jeweiligen Schieneneinrichtung kann offenbarungsgemäß sichergestellt werden, dass hierbei eine Kollision am Kreuzungspunkt vermieden wird. Hierbei kann gemäß der Offenbarung eine elektromechanische bzw. mechanische Bremseinrichtung in allen Schienensystemen vor dem gemeinsamen Kreuzungspunkt installiert sein. Die Ansteuerung dieser kann mit einer Verriegelung und Vorrangschaltung erfolgen, welche unabhängig von der grundsätzlichen, kollisionsverhindernden Ansteuerung des Systems eine sichere Kollisionsvermeidung der sich kreuzenden Schlitten gewährleisten kann.

Das System kann elektromechanisch, optional aber auch rein mechanisch, ausgeführt sein. Durch einen Steuercomputer, Positionssensoren und mechanische Bremsen im Schienensystem kann eine sichere Verzögerung der Schlitten zur Kollisionsvermeidung sichergestellt werden.

Beim Überfahren der signifikanten Sicherheitspunkte im Schienensystem (sog. zweites Positionssensorsystem) kann durch den zuerst den Kreuzungspunkt erreichenden Fahrzeugtransportschlitten die Querung des zweiten Fahrzeugtransportschlittens durch die mechanische Bremse im Schienensystem temporär ausgeschlossen werden. Nach einem erfolgreichen Überqueren des vorrangigen Transportschlittens kann dieses Schutzsystem wieder freigegeben werden.

Die Ansteuerung der Target-Bewegung, d.h. der Fahrzeugtransportschlitten, kann so gestaltet werden, dass grundsätzlich eine Kollision vermieden wird. Das Sicherheitssystem kann dieses System übersteuern und eine Kollision im Fehlerfall verhindern. Das Sicherheitssystem kann so ausgelegt sein, dass die maximalen Beschleunigungen und Verzögerungen der Probanden, d.h. der Testfahrzeuge, nicht überschritten werden.

Ferner wird ein Verfahren zum Betreiben eines Prüfstands zur Absicherung von Fahrassistenzsystemen automatisierter Kraftfahrzeuge bereitgestellt. Der Prüfstand umfasst ein Schienensystem mit zumindest zwei sich in einem Kreuzungspunkt kreuzenden Führungsschienen, je Führungsschiene jeweils einen Transportschlitten zum Transport eines Testfahrzeugs, und ein Sicherheitssystem aufweisend eine an dem Kreuzungspunkt angeordnete Vorrangschaltung. Das Verfahren zeichnet sich dadurch aus, dass es mittels der Vorrangschaltung verhindert, dass die zwei Transportschlitten, die sich entlang der jeweiligen Führungsschiene auf den Kreuzungspunkt zubewegen, den Kreuzungspunkt zeitgleich durchfahren.

Bei dem im Verfahren verwendeten Prüfstand kann es sich um den oben beschriebenen Prüfstand handeln.

Das oben mit Bezug zum Prüfstand, der auch als Kraftfahrzeugprüfstand bezeichnet werden kann, Beschriebene gilt analog auch für das Verfahren und umgekehrt.

Nachfolgend wird eine Ausführungsform mit Bezug zu Figuren 1 bis 5 beschrieben.
- Fig. 1: zeigt schematisch einen Prüfstand zur Absicherung von Fahrassistenzsystemen automatisierter Kraftfahrzeuge,
- Fig. 2: zeigt schematisch einen weiteren Prüfstand zur Absicherung von Fahrassistenzsystemen automatisierter Kraftfahrzeuge,
- Fig. 3: zeigt schematisch einen Aufbau des Prüfstands aus Figur 1 in einer Draufsicht,
- Fig. 4: zeigt schematisch den Aufbau des Prüfstands aus Figuren 1 in einer perspektivischen Seitenansicht, und
- Fig. 5: zeigt schematisch einen Aufbau eines Bremssystems des Prüfstands aus Figuren 1 und 2 in einer Draufsicht.

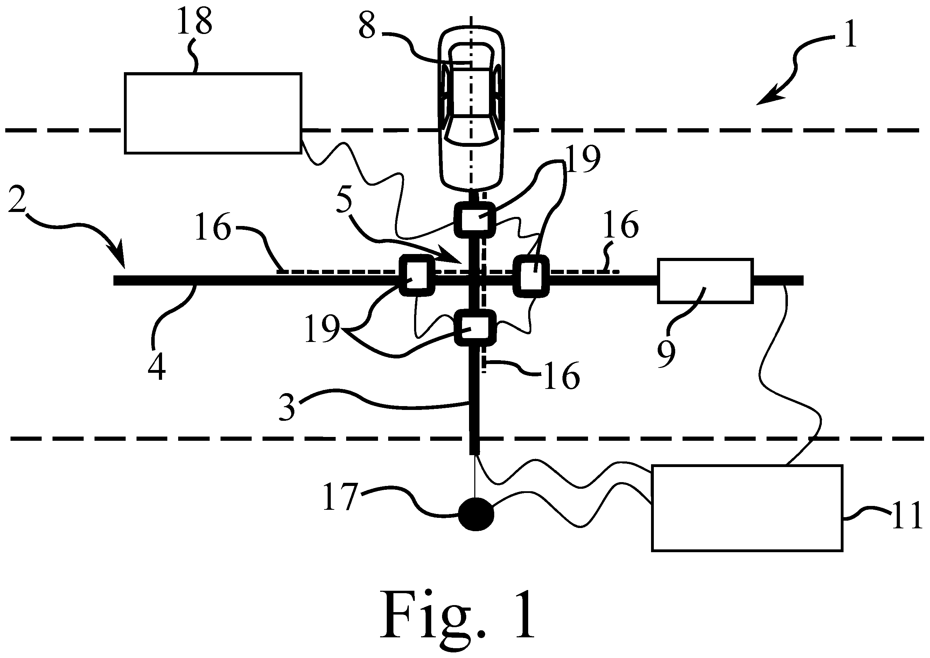

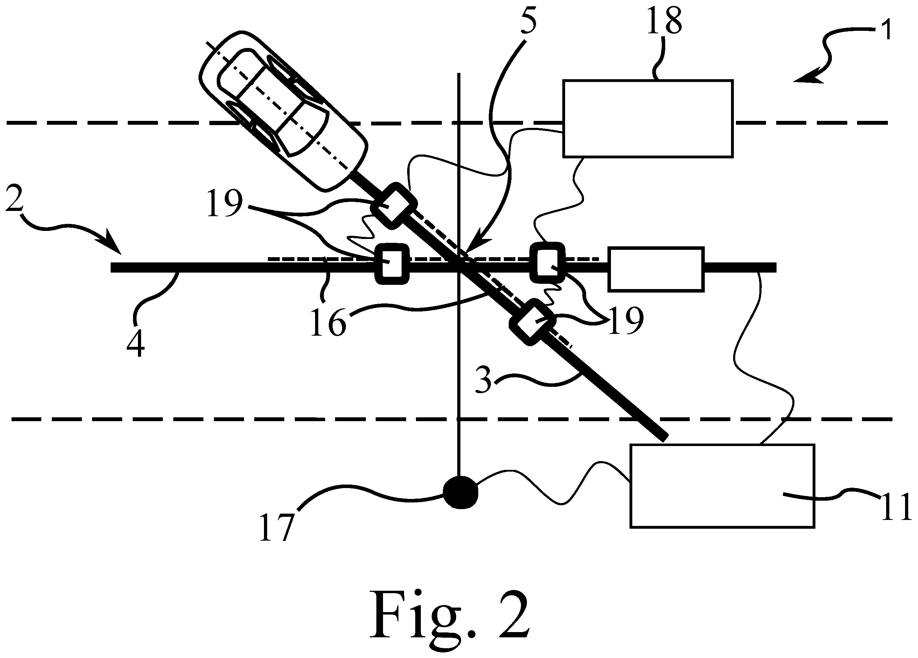

Der in den Figuren 1 und 2 in einer Draufsicht dargestellte Prüfstand 1 weist ein Schienensystem 2 mit zwei Führungsschienen 3, 4 auf, die sich in einem Kreuzungspunkt 5 kreuzen. Die zwei in Figuren 1 und 2 dargestellten Prüfstände 1 unterscheiden sich ausschließlich in einem Winkel, in dem die zwei Führungsschienen 3, 4 zueinander verlaufen bzw. unter dem sich die zwei Führungsschienen 3, 4 kreuzen, wobei der Winkel in Figur 1 90° und in Figur 2 45° beträgt. Dies sind nur Beispiele und es ist theoretisch jeder andere Winkel echt größer 0° wählbar.

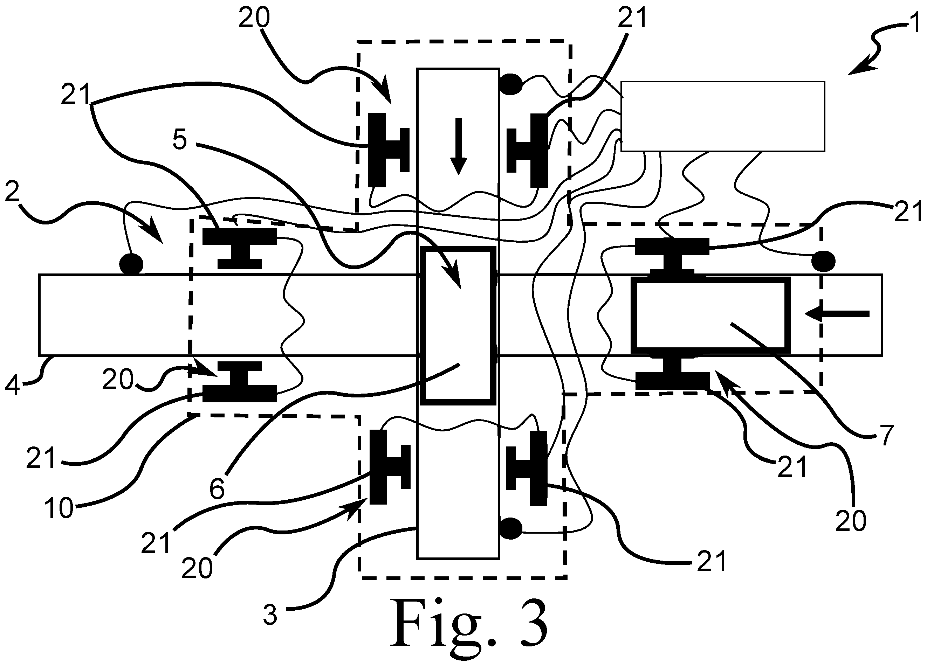

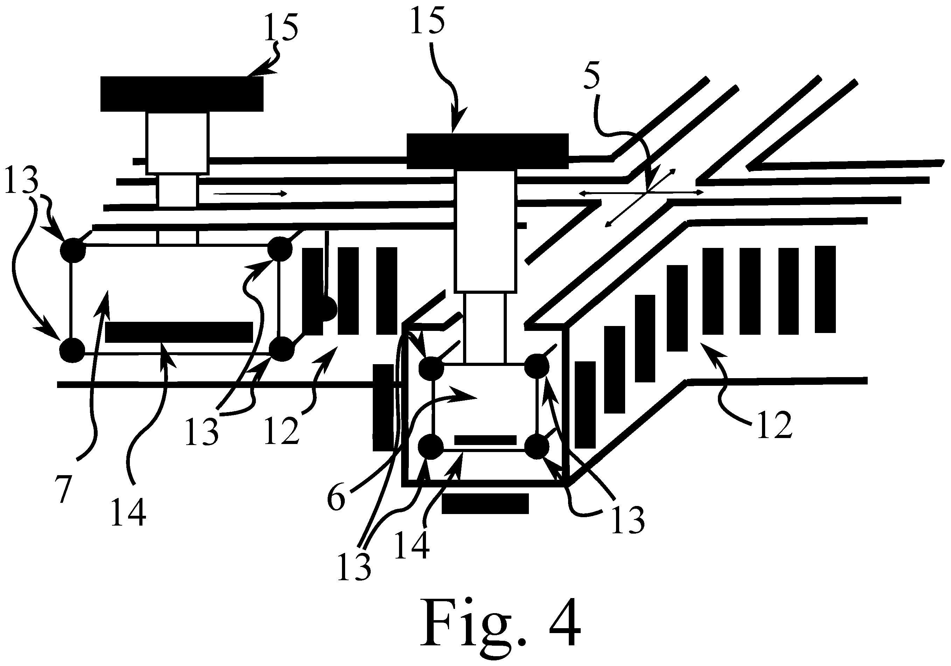

Wie insbesondere auch aus Figuren 3 bis 5 ersichtlich ist, weist jede der Führungsschienen 3, 4 einen in der jeweiligen Führungsschiene 3, 4 sowohl vertikal als auch horizontal geführten Transportschlitten 6, 7 auf, der zum Transport eines Testfahrzeugs 8, 9 einen Fahrzeughalter 15 aufweist.

Der Prüfstand 1 umfasst einen Linearmotor 12 je Führungsschiene 3, 4 zum Bewegen des jeweiligen über Rollen oder Gleitlager 13 in der jeweiligen Führungsschiene 3, 4 beweglich gelagerten Transportschlittens 6, 7 entlang der jeweiligen Führungsschiene 3, 4, wobei die Linearmotoren 12 zu einer Steuereinheit 11 für das Schienensystem 2 verbunden sind und den jeweiligen Transportschlitten 6, 7 über einen an oder im jeweiligen Transportschlitten 6, 7 angeordneten Dynamoabnehmer 14 antreiben.

Der Prüfstand weist ein erstes entlang den Führungsschienen 3, 4 angeordnetes Positionssensorsystem auf, das ausgestaltet ist, um eine jeweilige aktuelle erste Ist-Position der Transportschlitten 3, 4 zu erfassen.

Das erste Positionssensorsystem weist entlang der jeweiligen Transportschiene/Führungsschiene 3, 4 angeordnete erste Positionssensoren 16 und einen GPS-Referenzpunkt 17 auf. Die Steuereinheit 11 ist ausgestaltet, um basierend auf den von dem ersten Positionssensorsystem erfassten ersten Ist-Positionen der Transportschlitten 6, 7 eine jeweilige Soll-Position und Soll-Geschwindigkeit des jeweiligen Transportschlittens 6, 7 mittels des jeweiligen Linearmotors 12 so zu steuern, dass die Transportschlitten 6,7 den Kreuzungspunkt 5 durchfahren ohne sich zeitgleich am Kreuzungspunkt 5 zu befinden (d.h. ohne zu kollidieren).

Vorliegend bewegen sich die beiden Testfahrzeuge 8, 9, d.h. genauer gesagt ein zu testendes automatisiertes Automobil 8 und ein Motorrad 9, die an dem jeweiligen Fahrzeughalter 15 befestigt sind, auf den Kreuzungspunkt 5 zu, wie dies in Figur 3 durch die dargestellten Pfeile verdeutlicht ist.

Ferner weist der Prüfstand 1 ein Sicherheitssystem aufweisend eine in einem Bereich 10 (s. Figur 3) um den Kreuzungspunkt 5 angeordnete Vorrangschaltung auf, die ausgestaltet ist, um ein zeitgleiches Durchfahren des Kreuzungspunkts 5 durch die beiden Transportschlitten 6, 7 zu verhindern.

Das Sicherheitssystem umfasst eine Steuereinheit 18 für die Vorrangschaltung und ein zweites im Bereich des Kreuzungspunkts angeordnetes Positionssensorsystem mit Lichtschranken 19, das ausgestaltet ist, um eine jeweilige zweite Ist-Position der Transportschlitten 6, 7 zu bestimmen, d.h. um mittels der Lichtschranken 19 zu bestimmen, ob sich der jeweilige Transportschlitten 6, 7 im Bereich 10 um den Kreuzungspunkt 5 befindet.

Die Steuereinheit 18 für die Vorrangschaltung und die Steuereinheit 11 für das Schienensystem 2 sind als zwei physisch voneinander getrennte Systeme ausgeführt.

Die Steuereinheit 18 für die Vorrangschaltung ist ausgestaltet, um die Vorrangschaltung basierend auf den von dem zweiten Positionssensorsystem erfassten zweiten Ist-Positionen so zu steuern, dass die Vorrangschaltung das zeitgleiche Durchfahren des Kreuzungspunkts 5 durch die Transportschlitten 6, 7 verhindert.

Dafür sperrt die Steuereinheit 18 für die Vorrangschaltung mittels mehrerer (hier vier) Bremssysteme 20 die Durchfahrt in der jeweiligen Führungsschiene 3, 4, deren jeweiliger Transportschlitten 6, 7 sich (noch) nicht im Bereich 10 um den Kreuzungspunkt 5 befindet. Das heißt, die Vorrangschaltung umfasst je Führungsschiene 3, 4 zwei der Bremssysteme 20, wobei ein erstes der zwei Bremssysteme 20 an einer Seite des Kreuzungspunktes 5 und ein zweites der zwei Bremssysteme 20 an der gegenüberliegenden Seite des Kreuzungspunktes 5 angeordnet ist, sodass die jeweilige Führungsschiene 3, 4 in beide Richtungen betreibbar ist. Das Sperren der jeweiligen Führungsschiene 3, 4 kann entweder für einen vorbestimmten Zeitraum nach Eintritt des ersten Transportschlittens 6, 7 in den Bereich 10 um den Kreuzungspunkt 5 erfolgen oder kann solange durchgeführt werden, bis die mittels der auf der der Eintrittsseite des ersten Transportschlittens 6, 7 gegenüberliegenden Seite der jeweiligen Führungsschiene 3, 4 angeordneten Lichtschranke 19 festgestellt wird, dass der erste Transportschlitten den Bereich 10 wieder verlassen hat, d.h. den Kreuzungspunkt 5 passiert hat.

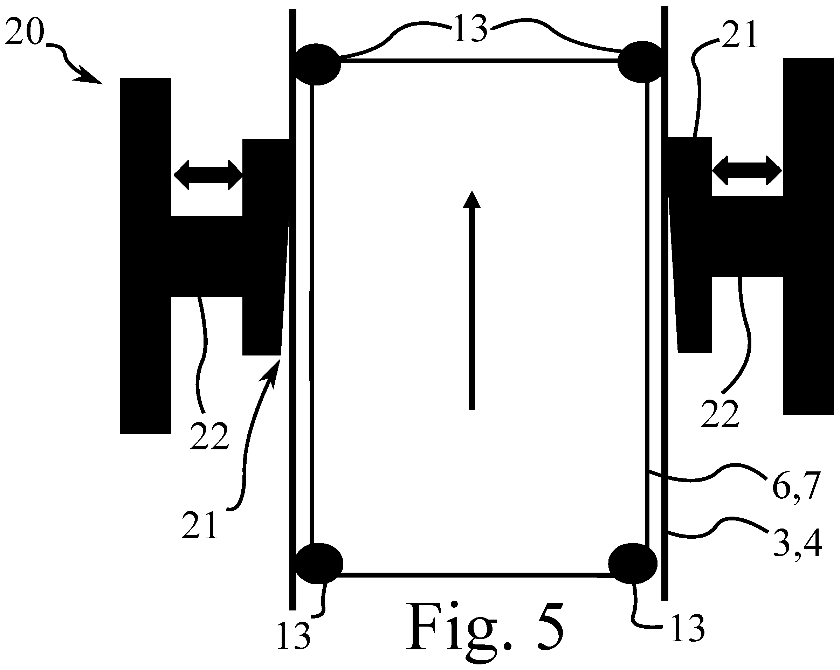

Wie insbesondre aus Figur 5 ersichtlich ist, umfasst jedes der Bremssysteme 20 jeweils zwei Bremsbacken 21, die keilförmig ausgebildet sind, d.h. die Bremsbacken 21 des Bremssystems 20 umfassen eine sich in Richtung des Kreuzungspunkts 5 (die durch einen Pfeil in Figur 5 angezeigt ist und der Fahrtrichtung des jeweiligen Transportschlittens 6, 7 entspricht) linear verbreiternde Form.

Die zwei sich an der jeweiligen Führungsschiene 3, 4 gegenüberliegend angeordneten Bremsbacken 21 werden in oben beschriebener Weise gesteuert durch die Steuereinheit 18 für die Vorrangschaltung mittels Bremsaktuatoren 22 zum Abbremsen bis hin zum Stoppen des jeweiligen Transportschlittens 6, 7 aufeinander zu bewegt (s. Doppelpfeile in Figur 5, wobei in Figur 5 der Zustand der ungehinderten Durchfahrt dargestellt ist). Das heißt, zum Sperren und Freigeben der jeweiligen Führungsscheine 3, 4 werden die Bremsbacken 21 des Bremssystems 20 mittels der Bremsaktuatoren 22 aufeinander zu bzw. voneinander wegbewegt, um eine für den jeweiligen Transportschlitten 6, 7 durchfahrbare Breite der jeweiligen Führungsschiene 3,4 zu verringern bzw. zu verbreitern und so eine Kollision der Transportschlitten 6, 7 am Kreuzungspunkt 5 sicher zu verhindern.

### Bezugszeichenliste

- 1: Prüfstand
- 2: Schienensystem
- 3: Führungsschiene
- 4: Führungsschiene
- 5: Kreuzungspunkt der Führungsschienen
- 6: Transportschlitten
- 7: Transportschlitten
- 8: zu testendes Kraftfahrzeug
- 9: Dummy-Fahrzeug oder im Test verwendetes Realfahrzeug
- 10: Bereich um den Kreuzungspunkt
- 11: Steuereinheit für das Schienensystem
- 12: Linearmotor
- 13: Rollen und/oder Gleitlager
- 14: Dynamoabnehmer
- 15: Fahrzeughalter
- 16: erste Positionssensoren
- 17: GPS-Referenzpunkt
- 18: Steuereinheit für die Vorrangschaltung
- 19: Lichtschranken
- 20: Bremssysteme
- 21: Bremsbacken
- 22: Bremsaktuatoren

## Patentansprüche

1. Prüfstand (1) zur Absicherung von Fahrassistenzsystemen automatisierter Kraftfahrzeuge (8), wobei der Prüfstand (1) aufweist:
- ein Schienensystem (2) mit zumindest zwei sich in einem Kreuzungspunkt (5) kreuzenden Führungsschienen (3, 4),
- je Führungsschiene (3, 4) jeweils einen Transportschlitten (6, 7) zum Transport eines Testfahrzeugs (8, 9), und
- ein Sicherheitssystem aufweisend eine an dem Kreuzungspunkt (5) angeordnete Vorrangschaltung, die ausgestaltet ist, um ein zeitgleiches Durchfahren des Kreuzungspunkts (5) durch die beiden Transportschlitten (6, 7) zu verhindern.

2. Prüfstand (1) nach Anspruch 1, **dadurch gekennzeichnet, dass** das Schienensystem (2) aufweist:
- einen Motor (12) je Führungsschiene (3, 4) zum Bewegen des jeweiligen Transportschlittens (6, 7) entlang der jeweiligen Führungsschiene (3, 4),
- ein erstes entlang den Führungsschienen (3, 4) angeordnetes Positionssensorsystem (16, 17), das ausgestaltet ist, um eine jeweilige aktuelle erste Ist-Position der Transportschlitten (6, 7) zu erfassen,
- eine Steuereinheit (11) für das Schienensystem (2), die ausgestaltet ist, um basierend auf den von dem ersten Positionssensorsystem (16, 17) erfassten ersten Ist-Positionen eine jeweilige Soll-Position und Soll-Geschwindigkeit des jeweiligen Transportschlittens (6, 7) mittels des jeweiligen Motors (12) so zu steuern, dass die Transportschlitten (6, 7) den Kreuzungspunkt (5) durchfahren ohne sich zeitgleich am Kreuzungspunkt (5) zu befinden.

3. Prüfstand (1) nach Anspruch 1 oder 2, **dadurch gekennzeichnet, dass** das Sicherheitssystem aufweist:
- eine Steuereinheit (18) für die Vorrangschaltung, und
- ein zweites im Bereich (10) des Kreuzungspunkts (5) angeordnetes Positionssensorsystem (19), das ausgestaltet ist, um eine jeweilige zweite Ist-Position der Transportschlitten (6, 7) zu bestimmen,
- wobei die Steuereinheit (18) für die Vorrangschaltung ausgestaltet ist, um die Vorrangschaltung basierend auf den von dem zweiten Positionssensorsystem (19) erfassten zweiten Ist-Positionen so zu steuern, dass die Vorrangschaltung das zeitgleiche Durchfahren des Kreuzungspunkts (5) durch die Transportschlitten (6, 7) verhindert.

4. Prüfstand (1) nach Anspruch 3, **dadurch gekennzeichnet, dass** die Steuereinheit (18) für die Vorrangschaltung ausgestaltet ist, um die Vorrangschaltung basierend auf den zweiten Ist-Positionen so zu steuern, dass ein Überfahren des Kreuzungspunktes (5) für einen vorbestimmten Zeitraum nach einem Erreichen des Bereichs des Kreuzungspunkts (5) durch einen ersten der zwei Transportschlitten (6, 7) für einen zweiten der zwei Transportschlitten (6, 7) verhindert wird.

5. Prüfstand (1) nach Anspruch 3 oder 4, wenn auf Anspruch 2 rückbezogen, **dadurch gekennzeichnet, dass** die Steuereinheit (18) für die Vorrangschaltung und die Steuereinheit (11) für das Schienensystem (2) als zwei, insbesondere physisch, voneinander getrennte Systeme ausgeführt sind.

6. Prüfstand (1) nach einem der Ansprüche 1 bis 5, **dadurch gekennzeichnet, dass** die Vorrangschaltung im Bereich (10) des Kreuzungspunkts (5) je Führungsschiene (3, 4) jeweils zumindest ein Bremssystem (20) aufweisend zwei sich an der jeweiligen Führungsschiene (3, 4) gegenüberliegend angeordnete Bremsaktuatoren (22) mit Bremsbacken (21) zum Abbremsen oder Stoppen des jeweiligen Transportschlittens (6, 7) aufweist.

7. Prüfstand (1) nach Anspruch 6, **dadurch gekennzeichnet, dass** die Vorrangschaltung je Führungsschiene (3, 4) wenigstens zwei derartige Bremssysteme (20) aufweist, wobei ein erstes der zwei Bremssysteme (20) an einer Seite des Kreuzungspunktes (5) und ein zweites der zwei Bremssysteme (20) an der gegenüberliegenden Seite des Kreuzungspunktes (5) angeordnet ist, sodass die jeweilige Führungsschiene (3, 4) in beide Richtung betreibbar ist.

8. Prüfstand (1) nach Anspruch 6 oder 7, **dadurch gekennzeichnet, dass** die Bremsbacken (21) des Bremssystems (20) mittels der Bremsaktuatoren (22) aufeinander zu und/oder voneinander weg bewegbar sind, um eine für den jeweiligen Transportschlitten (6, 7) durchfahrbare Breite der jeweiligen Führungsschiene (3, 4) zu verringern und/oder zu verbreitern.

9. Prüfstand (1) nach einem der Ansprüche 6 bis 8, **dadurch gekennzeichnet, dass** die Bremsbacken (21) des Bremssystems (20) eine sich in Richtung des Kreuzungspunkts (5), insbesondere linear, verbreiternde Form aufweisen.

10. Verfahren zum Betreiben eines Prüfstands (1) zur Absicherung von Fahrassistenzsystemen automatisierter Kraftfahrzeuge (8), wobei der Prüfstand (1) aufweist:
- ein Schienensystem (2) mit zumindest zwei sich in einem Kreuzungspunkt (5) kreuzenden Führungsschienen (3, 4),
- je Führungsschiene (3, 4) jeweils einen Transportschlitten (6, 7) zum Transport eines Testfahrzeugs (8, 9), und
- ein Sicherheitssystem aufweisend eine an dem Kreuzungspunkt (5) angeordnete Vorrangschaltung,
wobei das Verfahren aufweist:
- Verhindern mittels der Vorrangschaltung, dass die zwei Transportschlitten (6, 7), die sich entlang der jeweiligen Führungsschiene (3, 4) auf den Kreuzungspunkt (5) zubewegen, den Kreuzungspunkt (5) zeitgleich durchfahren.

## Claims

1. Test stand (1) for the protection of driver assistance systems of automated motor vehicles (8), the test stand (1) having:
- a rail system (2) with at least two guide rails (3, 4) crossing at an intersection point (5),
- a transport carriage (6, 7) for each guide rail (3, 4) for transporting a test vehicle (8, 9), and
- a safety system having a priority circuit located at the intersection point (5), which is designed to prevent the two transport carriages (6, 7) from passing through the intersection point (5) at the same time.

2. Test stand (1) according to Claim 1, **characterized in that** the rail system (2) has:
- a motor (12) per guide rail (3, 4) for moving the respective transport carriage (6, 7) along the respective guide rail (3, 4),
- a first position sensor system (16, 17) arranged along the guide rails (3, 4), which is designed to capture a respective current first actual position of the transport carriages (6, 7),
- a control unit (11) for the rail system (2), which is designed to control a respective target position and target speed of the respective transport carriage (6, 7) by means of the respective motor (12) based on the first actual positions captured by the first position sensor system (16, 17) in such a way that the transport carriages (6, 7) pass through the intersection point (5) without being at the intersection point (5) at the same time.

3. Test stand (1) according to Claim 1 or 2, **characterized in that** the safety system has:
- a control unit (18) for the priority circuit, and
- a second position sensor system (19) arranged in the area (10) of the intersection point (5), which is designed to determine a respective second actual position of the transport carriages (6, 7),
- wherein the control unit (18) for the priority circuit is designed to control the priority circuit based on the second actual positions captured by the second position sensor system (19) in such a way that the priority circuit prevents the transport carriages (6, 7) from passing through the intersection point (5) at the same time.

4. Test stand (1) according to Claim 3, **characterized in that** the control unit (18) for the priority circuit is designed to control the priority circuit based on the second actual positions in such a way that a second of the two transport carriages (6, 7) is prevented from crossing the intersection point (5) for a predetermined period of time after a first of the two transport carriages (6, 7) reaches the area of the intersection point (5).

5. Test stand (1) according to Claim 3 or 4, when referred back to Claim 2, **characterized in that** the control unit (18) is implemented for the priority circuit and the control unit (11) is implemented for the rail system (2) as two separate systems, in particular physically separate.

6. Test stand (1) according to any one of Claims 1 to 5, **characterized in that** the priority circuit in the area (10) of the intersection point (5) for each guide rail (3, 4) has at least one brake system (20) in each case with two brake actuators (22) with brake shoes (21) arranged opposite each other on the respective guide rail (3, 4) for braking or stopping the respective transport carriage (6, 7).

7. Test stand (1) according to Claim 6, **characterized in that** the priority circuit for each guide rail (3, 4) has at least two such brake systems (20), wherein a first of the two brake systems (20) is arranged on one side of the intersection point (5) and a second of the two brake systems (20) is arranged on the opposite side of the intersection point (5) so that the respective guide rail (3, 4) can be operated in both directions.

8. Test stand (1) according to Claim 6 or 7, **characterized in that** the brake shoes (21) of the brake system (20) can be moved towards and/or away from each other by means of the brake actuators (22) in order to decrease and/or increase a traversable width of the respective guide rail (3, 4) for the respective transport carriage (6, 7).

9. Test stand (1) according to any one of Claims 6 to 8, **characterized in that** the brake shoes (21) of the brake system (20) have a shape that widens towards the intersection point (5), in particular widens linearly.

10. Method for the operation of a test stand (1) for the protection of driver assistance systems of automated motor vehicles (8), wherein the test stand (1) has:
- a rail system (2) with at least two guide rails (3, 4) crossing at an intersection point (5),
- a transport carriage (6, 7) for each guide rail (3, 4) for transporting a test vehicle (8, 9), and
- a safety system having a priority circuit arranged at the intersection point (5),
wherein the method includes:
- preventing, by means of the priority circuit, the two transport carriages (6, 7), which are moving along the respective guide rail (3, 4) towards the intersection point (5), from passing through the intersection point (5) at the same time.

## Revendications

1. Banc d'essai (1) de protection de systèmes d'aide à la conduite de véhicules à moteur (8) automatisés, le banc d'essai (1) comportant :
- un système de rails (2) avec au moins deux rails de guidage (3, 4) se croisant en un point d'intersection (5),
- par rail de guidage (3, 4) respectivement un chariot de transport (6, 7) pour transporter un véhicule de test (8, 9), et
- un système de sécurité comportant un circuit de priorité disposé sur le point d'intersection (5), qui est configuré pour empêcher que les deux chariots de transport (6, 7) ne traversent le point d'intersection (5) simultanément.

2. Banc d'essai (1) selon la revendication 1, **caractérisé en ce que** le système de rails (2) comporte :
- un moteur (12) par rail de guidage (3, 4) pour déplacer le chariot de transport (6, 7) respectif le long du rail de guidage (3, 4) respectif,
- un premier système de capteur de position (16, 17) disposé le long des rails de guidage (3, 4), lequel est configuré pour détecter une première position réelle actuelle des chariots de transport (6, 7),
- une unité de commande (11) pour le système de rails (2), qui est configuré pour commander, sur la base des premières positions réelles détectées par le premier système de capteur de position (16, 17), une position théorique respective et une vitesse théorique du chariot de transport (6, 7) respectif au moyen du moteur (12) respectif de telle sorte que les chariots de transport (6, 7) traversent le point d'intersection (5) sans se trouver simultanément sur le point d'intersection (5).

3. Banc d'essai (1) selon la revendication 1 ou 2, **caractérisé en ce que** le système de sécurité comporte :
- une unité de commande (18) pour le circuit de priorité, et
- un deuxième système de capteur de position (19) disposé dans la zone (10) du point d'intersection (5), qui est configuré pour définir une deuxième position réelle respective des chariots de transport (6, 7),
- l'unité de commande (18) pour le circuit de priorité étant configurée pour commander le circuit de priorité sur la base des deuxièmes positions réelles détectées par le deuxième système de capteur de position (19) de telle sorte que le circuit de priorité empêche que les chariots de transport (6, 7) ne traversent le point d'intersection (5) simultanément.

4. Banc d'essai (1) selon la revendication 3, **caractérisé en ce que** l'unité de commande (18) pour le circuit de priorité est configurée pour commander le circuit de priorité sur la base des deuxièmes positions réelles de telle sorte qu'un passage du point d'intersection (5) pendant une période de temps prédéfinie, après que la zone du point d'intersection (5) a été atteinte par un premier des deux chariots de transport (6, 7), est empêché pour un second des deux chariots de transport (6, 7).

5. Banc d'essai (1) selon la revendication 3 ou 4, lorsqu'elles se rapportent à la revendication 2, **caractérisé en ce que** l'unité de commande (18) pour le circuit de priorité et l'unité de commande (11) pour le système de rails (2) sont réalisées en tant que deux systèmes séparés l'un de l'autre, en particulier physiquement.

6. Banc d'essai (1) selon l'une des revendications 1 à 5, **caractérisé en ce que** le circuit de priorité comporte, dans la zone (10) du point d'intersection (5), par rail de guidage (3, 4), respectivement au moins un système de freinage (20) comportant deux actionneurs de freinage (22) disposés en vis-à-vis sur le rail de guidage (3, 4) respectif avec des mâchoires de freinage (21) pour ralentir ou arrêter le chariot de transport (6, 7) respectif.

7. Banc d'essai (1) selon la revendication 6, **caractérisé en ce que** le circuit de priorité comporte par rail de guidage (3, 4) au moins deux systèmes de freinage (20) de ce type, un premier des deux systèmes de freinage (20) étant disposé sur un côté du point d'intersection (5) et un second des deux systèmes de freinage (20) étant disposé sur le côté opposé du point d'intersection (5) si bien que le rail de guidage (3, 4) respectif peut fonctionner dans les deux directions.

8. Banc d'essai (1) selon la revendication 6 ou 7, **caractérisé en ce que** les mâchoires de freinage (21) du système de freinage (20) peuvent être déplacées les unes vers les autres et/ou de manière à s'éloigner les unes des autres au moyen des actionneurs de freinage (22) pour réduire et/ou élargir une largeur du rail de guidage (3, 4) respectif pouvant être traversée pour le chariot de transport (6, 7) respectif.

9. Banc d'essai (1) selon l'une des revendications 6 à 8, **caractérisé en ce que** les mâchoires de freinage (21) du système de freinage (20) présentent une forme s'élargissant en direction du point d'intersection (5), en particulier linéairement.

10. Procédé destiné à faire fonctionner un banc d'essai (1) de protection de systèmes d'aide à la conduite de véhicules à moteur (8) automatisés, le banc d'essai (1) comportant :
- un système de rails (2) avec au moins deux rails de guidage (3, 4) se croisant en un point d'intersection (5),
- par rail de guidage (3, 4) respectivement un chariot de transport (6, 7) pour transporter un véhicule de test (8, 9), et
- un système de sécurité comportant un circuit de priorité disposé sur le point d'intersection (5),
le procédé comprenant :
- l'empêchement au moyen du circuit de priorité que les deux chariots de transport (6, 7), qui se déplacent vers le point d'intersection (5) le long du rail de guidage (3, 4) respectif, ne traversent le point d'intersection (5) simultanément.
